# FASCICULE DE BREVET EUROPEEN

(11) **EP 2 638 635 B1**
(45) Date de publication et mention de la délivrance du brevet: **31.12.2014**
(21) Numéro de dépôt: 11824270.0
(22) Date de dépôt: 28.10.2011
(51) Int. Cl.: H04B 1/00, H04B 1/28

(54) **DISPOSITIF DE RECEPTION DE DONNEES, PROCEDE DE RECEPTION, PROGRAMME D'ORDINATEUR ET SUPPORT D'ENREGISTREMENT CORRESPONDANTS**
DATENEMPFANGSVORRICHTUNG UND ENTSPRECHENDES EMPFANGSVERFAHREN, COMPUTERPROGRAMM UND AUFZEICHNUNGSMEDIUM
DATA RECEPTION DEVICE, AND CORRESPONDING RECEPTION METHOD, COMPUTER PROGRAM, AND RECORDING MEDIUM

(30) Priorité: 08.11.2010 FR 1059206
(43) Date de publication de la demande: 18.09.2013
(73) Titulaire: Orange, 75015 Paris (FR)
(72) Inventeur: LANOISELEE, Marc, F-35200 Rennes (FR); CARIOU, Laurent, F-35000 Rennes (FR)
(74) Mandataire: Milon, Marie-Anne
(86) Numéro de dépôt international: PCT/FR2011/052540
(87) Numéro de publication internationale: WO 2012/066209

(56) Documents cités:
- US-A1- 2008 112 519
- US-B1- 6 690 735

## Description

### 1. Domaine de l'invention

Le domaine de l'invention est celui des communications radiofréquences, et plus particulièrement de la gestion des ressources en fréquence entre les différents équipements d'un réseau de communication. L'invention s'applique notamment, mais non exclusivement, à des équipements d'un réseau local sans fil, et par exemple aux systèmes émettant dans une bande de fréquence située autour de 2,4 GHz ou de 5 GHz, dans lesquelles fonctionnent notamment des équipements selon la norme IEEE 802.11n ou ses versions révisées, appelée couramment Wi-Fi.

On entend donc ici par équipement notamment un élément appartenant à un ensemble de services de base (en anglais BSS pour « *basic service set* »), formé par un point d'accès (en anglais AP *« access point »*), ou un coordinateur de réseau personnel sans fil (en anglais PNC pour «*PicoNet Coordinator* »), et les stations associées à ce point d'accès, c'est-à-dire les stations situées dans la zone de couverture de ce point d'accès.

Plus précisément, l'invention concerne les transmissions radiofréquences WLAN (pour « *Wireless Local Area Network* » en anglais) nécessitant une modification dynamique de la largeur de bande de fréquence en cours de transmission.

### 2. Art antérieur

Un dispositif de réception de signaux multi-bandes et multi-modes est décrit dans le document US2008/112519.

Actuellement, la norme IEEE 802.11n définit un protocole permettant de transmettre des données sur une largeur de bande de 40 MHz, en regroupant ou « concaténant » deux canaux adjacents de 20 MHz (le WIFI fonctionnant classiquement sur des canaux de 20 MHz).

Un tel protocole définit un canal primaire sur lequel un mécanisme d'attribution du canal, connu sous le nom de CSMA-CA (pour « *Carrier Sense Multiple Access with Collision Avoidance*» en anglais), est appliqué, et un canal secondaire, sur lequel le mécanisme CSMA-CA n'est pas effectué. Ce canal secondaire est toutefois scanné, afin d'effectuer une vérification de l'occupation de ce canal par un mécanisme couche physique CCA (« *Clear Channel Assessment »* en anglais) pendant une durée notée « PIFS » (pour « *Point coordination function Inter-Frame Spacing* » en anglais, de 25 à 36 µs selon la norme IEEE 802.11n), lorsqu'une transmission sur une bande de fréquence de 40 MHz est envisagée.

Pour des raisons de compatibilité rétrograde, la transmission de données utiles sur un canal présentant une largeur de bande de 40 MHz, dit canal « concaténé », doit être précédée de la transmission de préambules sur le canal primaire (présentant une largeur de bande de 20 MHz) et sur le canal secondaire (présentant également une largeur de bande de 20 MHz), et doit être comprise par toute station ne pouvant recevoir des données que sur une largeur de bande de 20 MHz.

Or les stations réceptrices ne savent pas si la transmission à venir sera effectuée sur une largeur de bande de 20 MHz ou de 40 MHz. Elles doivent donc recevoir ces préambules sur une bande de 20 MHz seulement, de préférence sur le canal primaire, car le canal secondaire peut être occupé par des transmissions d'autres stations ou d'autres points d'accès (AP), et ce jusqu'à la réception d'un champ de signalisation HT-SIG2, où un bit de signalisation informe le récepteur de la largeur de bande utilisée pour la transmission en cours (20 MHz ou 40 MHz).

Dans le cas d'une transmission utilisant une bande de 40 MHz, le récepteur doit alors changer sa bande passante afin de recevoir des données sur une bande de 40 MHz (correspondant au canal primaire et au canal secondaire) et non plus sur une bande de 20 MHz (correspondant au canal primaire).

Dans les récepteurs actuels, une réception permanente sur une bande de 40 MHz est généralement adoptée.

Toutefois, une telle technique présente l'inconvénient de recevoir de l'interférence sur le canal secondaire lors d'une transmission limitée à 20 MHz sur le seul canal primaire. En effet, le canal secondaire peut être occupé par une station ou un point d'accès adjacent, et les données transmises sur ce canal secondaire sont également reçues par le récepteur. En particulier, l'inconvénient de cette solution réside dans le fait que le rapport entre les amplitudes des données à transmettre sur ces deux canaux n'est pas maîtrisé. En effet, si le canal secondaire porte des données présentant une amplitude supérieure de plusieurs dizaines de décibels (dB) à l'amplitude des données du canal primaire, la réception sur le canal primaire peut être fortement dégradée, voire complètement compromise.

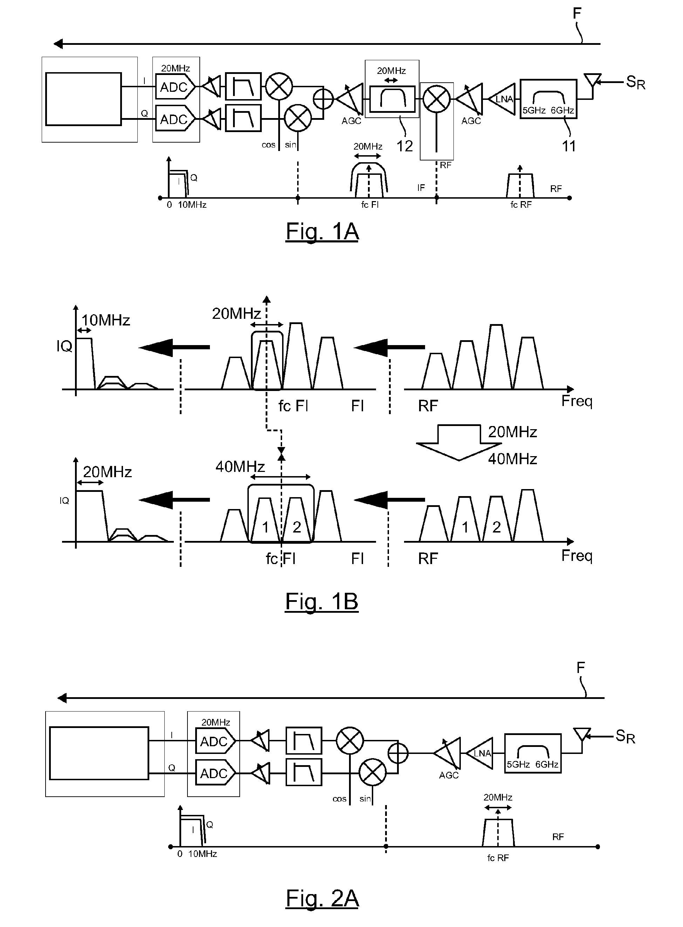

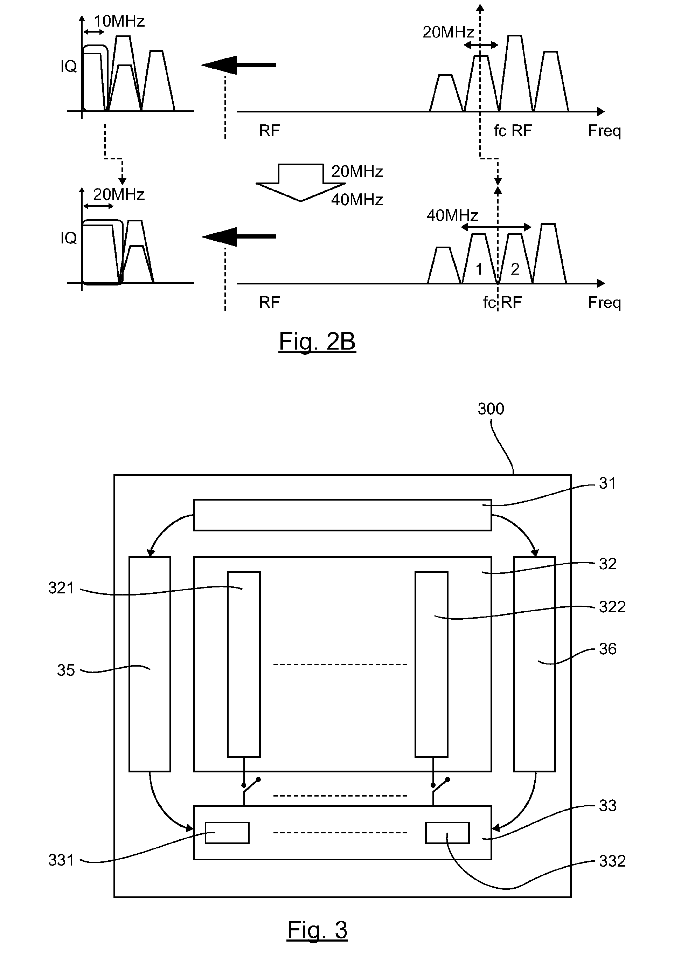

Pour remédier à ces inconvénients, deux solutions de l'art antérieur ont été proposées, mettant respectivement en oeuvre une réception à double changement de fréquence, également connue sous le nom de principe superhétérodyne, illustrée en figures 1A et 1B, ou une réception à conversion directe, également connue sous le nom de « Zero-IF », illustrée en figures 2A et 2B (le sens de réception étant illustré par la flèche F).

Le récepteur à double changement de fréquence est représenté à la figure 1A dans une configuration de réception d'un signal S_{R} transmis dans un canal de 20 MHz de bande passante. Le signal est reçu en radiofréquence, dans une bande de fréquence située entre 5 à 5,9 GHz par exemple, filtré avec cette largeur de bande par un premier filtre 11, puis converti en fréquence intermédiaire. Puis, un second filtre 12 sélectif de largeur 20 MHz va permettre d'éliminer des signaux adjacents potentiellement perturbateurs.

Comme illustré en figure 1B, pour passer d'une transmission sur une bande de 20 MHz à une bande de 40 MHz avec l'objectif de conserver dans chaque cas la meilleure qualité de réception possible, le récepteur à double changement de fréquence doit changer de fréquence intermédiaire (décalage de 10 MHz) et de filtre pour s'adapter à l'élargissement de la largeur de bande. On remplace dans ce cas le filtre de 20 MHz de largeur de bande par un filtre de 40 MHz de largeur de bande.

Le second principe de réception, de type Zéro IF, est représenté à la figure 2A. Dans cette configuration, le signal est transposé directement en bande de base par un oscillateur dont la fréquence est la fréquence centrale du canal recherché. L'élimination des signaux adjacents potentiellement perturbateurs est assurée cette fois en bande de base par des filtres passe bas très sélectifs.

Comme illustré en figure 2B, pour passer d'une transmission de 20 MHz à 40 MHz avec l'objectif de conserver dans chaque cas la meilleure qualité de réception possible, c'est l'oscillateur de transposition radiofréquence du récepteur de type Zéro IF qui doit être décalé en fréquence et les filtres passe-bas bande de base élargis de 10 à 20 MHz.

Ainsi, le passage dynamique en cours de transmission d'une implémentation de 20 MHz à 40 MHz de largeur de canal se heurte selon ces deux techniques de réception :
- aux changements des filtres en fréquence intermédiaire (FI) ou bande de base, changements qui vont nécessiter un certain délai d'adaptation en amplitude des données à transmettre et en retard notamment, et pourront entraîner de ce fait une interruption de la transmission (perte de la synchronisation),
- au changement de la fréquence des oscillateurs en fréquence intermédiaire (FI) ou RF chargés d'effectuer les transpositions de fréquence, changement qui pourra occasionner les mêmes perturbations que pour la commutation des filtres.

Ainsi, les inventeurs ont constaté qu'actuellement la reconfiguration du récepteur d'une bande de réception de 20 MHz à une bande de réception de 40 MHz est un point bloquant du fait qu'il n'apparaît pas directement de méthode simple et satisfaisante, même partiellement, pour gérer une modification dynamique de bande passante de 20 à 40 MHz sans occasionner de perturbation sur une transmission établie au préalable sur une bande de 20 MHz.

Par la suite, on entend par « configuration de réception », un mode de réception caractérisé par sa largeur de bande de réception. Par exemple, dans le cas appliqué à la norme IEEE 802.11n, on aura une première configuration de réception à 20 MHz, correspondant à une réception sur une bande de 20 MHz, et une deuxième configuration de réception à 40 MHz, correspondant à une réception sur une bande de 40 MHz.

### 3. Exposé de l'invention

L'invention propose une solution nouvelle qui ne présente pas l'ensemble de ces inconvénients de l'art antérieur, sous la forme d'un dispositif de réception de données transmises dans un réseau de communication utilisant une pluralité de canaux radiofréquence, au moins deux canaux radiofréquence adjacents étant concaténés pour former un canal concaténé.

Selon l'invention, un tel dispositif comprend :
- des moyens de réception de données transmises dans au moins un canal radiofréquence dudit canal concaténé, dites données reçues,
- des moyens de transposition en fréquence intermédiaire desdites données reçues, délivrant des données en fréquence intermédiaire,
- des moyens de filtrage desdites données en fréquence intermédiaire, lesdits moyens de filtrage comprenant au moins deux voies de filtrage distinctes, chaque voie de filtrage comprenant un filtre passe-bande dont la bande de fréquence correspond à la bande de fréquence d'un canal radiofréquence distinct dudit canal concaténé, tel que la bande de fréquence globale desdits filtres soit égale à la bande de fréquence dudit canal concaténé,
- des moyens d'activation d'au moins une desdites voies de filtrage, permettant de filtrer lesdites données reçues,
- des moyens de recombinaison des données issues desdites voies de filtrage.

L'invention propose ainsi un récepteur d'un nouveau type, permettant une modification dynamique de la largeur de la bande de fréquence de transmission en cours de réception.

Un tel récepteur est simple à mettre en oeuvre et permet de conserver une synchronisation en réception, du fait de l'utilisation de moyens de filtrage comprenant au moins deux voies de filtrage distinctes. De tels moyens de filtrage permettent de réaliser un filtrage en fréquence intermédiaire en s'affranchissant des changements de filtres en fréquence intermédiaire (FI), classiquement nécessaires pour s'adapter à la largeur de la bande de fréquence véhiculant les données utiles.

Le récepteur proposé permet donc d'éviter une interruption de la réception des données.

L'utilisation de tels moyens de filtrage permet également d'éviter les perturbations dues au changement de fréquence des oscillateurs en fréquence intermédiaire FI ou RF, chargés d'effectuer les transpositions de fréquence.

En effet, le dispositif selon l'invention tire profit de la présence d'au moins deux voies de filtrage distinctes comprenant chacune un filtre passe-bande dont la bande de fréquence correspond à la bande de fréquence d'un canal radiofréquence distinct. Selon l'application visée, le dispositif selon l'invention met en oeuvre autant de voies de filtrage que de canaux radiofréquence formant le canal concaténé. Une fois combinés, ces différents filtres passe-bande forment un filtre de bande passante uniforme, dont la largeur de bande correspond à la largeur de bande du canal concaténé. En d'autres termes, dans le cas appliqué à la norme IEEE 802.11n, le canal concaténé est formé de deux canaux radiofréquence adjacents présentant chacun une largeur de bande égale à 20 MHz et la largeur de la bande de fréquence globale associée au canal concaténé est de 40 MHz.

Ainsi, les filtres passe-bande de chaque voie de filtrage sont décalés par exemple de 20 MHz, et le filtre « global » obtenu en combinant ces différents filtres passe-bande présentent une largeur de bande de 40 MHz. L'une et/ou l'autre de ces voies de filtrage est ensuite activée par des moyens d'activation.

En conséquence, il résulte d'un récepteur selon l'invention une meilleure efficacité de passage dynamique d'une configuration de réception à une autre, en cours de réception. Par exemple, pour un passage d'une configuration de réception à 20 MHz à une configuration de réception à 40 MHz, le basculement de 20 MHz à 40 MHz de largeur de bande (ou inversement de 40 MHz à 20 MHz), ne modifie pas les conditions de réception sur le canal primaire de 20 MHz, associé à une première voie de filtrage.

En effet, la première voie de filtrage est par exemple activée que l'on soit dans une configuration de réception à 40 MHz ou à 20 MHz, et reste activée lors du basculement d'une configuration de réception de 20 MHz à 40 MHz (mettant en oeuvre l'activation d'une deuxième voie de filtrage) ou inversement lors du basculement d'une configuration de réception de 40 MHz à 20 MHz.

Ainsi, un récepteur selon l'invention permet de mettre en oeuvre différentes configurations de réception à largeur de bande variable en cours de réception et sans interruption de réception, tout en conservant une réception optimale sur au moins un canal radiofréquence.

Selon un mode de réalisation particulier, lesdits moyens d'activation comprennent au moins un amplificateur à gain variable.

En effet, selon un premier exemple un unique amplificateur à gain variable peut contrôler les différentes voies de filtrage.

Selon un autre exemple, les moyens d'activation comprennent un amplificateur à gain variable pour chaque voie de filtrage. Ainsi, chaque voie de filtrage est distincte et indépendante et met en oeuvre un contrôle de gain qui va permettre d'activer ou de désactiver un filtre passe-bande de la voie de filtrage, et de passer d'une configuration de réception à une autre sans perturbation, en combinant les données issues des différentes voies de filtrage.

L'utilisation d'amplificateurs à gain variable permet en outre une activation/désactivation fluide et progressive des voies de filtrage sans engendrer de coupure de la réception des données utiles.

En outre, le contrôle de gain indépendant par voie de filtrage permet un ajustement des amplitudes des réponses issues de chaque voie de filtrage activée.

Selon une caractéristique particulière, lesdits filtres passe-bande présentent des gabarits se coupant à -6dB.

Ainsi, ces filtres passe-bande sont tels qu'ils forment un seul filtre de bande passante uniforme lorsqu'ils sont combinés, avec idéalement un point de coupure à -6dB lorsque la réponse en phase de ces deux filtres est identique en ce point. L'invention permet ainsi de fournir une réponse idéale du canal concaténé.

En effet, les filtres présentent des gabarits dont la recombinaison constitue exactement un filtre dont la largeur de bande est égale à la largeur de bande du canal concaténé.

Par exemple, pour un signal reçu dans un canal concaténé présentant une largeur de bande de 40 MHz, les filtres passe-bande de chaque voie de filtrage présentent un gabarit de 20 MHz et les courbes de réponse de ces deux filtres décalés de 20 MHz se coupent en présentant une atténuation de 6 dB. La sommation de ces deux filtres décalés de 20 MHz permet donc de former un filtre idéal de gabarit 40 MHz sans aucune atténuation à la jonction des deux filtres.

Selon un aspect particulier de l'invention, le dispositif de réception comprend en outre des moyens de mesure de puissance desdites données reçues, sur chaque canal radiofréquence dudit canal concaténé, et lesdits moyens d'activation tiennent compte desdites mesures de puissance.

Ainsi, il est possible de connaître la puissance respective de chacun des deux canaux radiofréquence. Ces moyens permettent donc de sonder (« scanner ») les canaux radiofréquence afin de déterminer notamment les configurations de réception recherchées. Les amplificateurs à gain variable utilisent ensuite ces informations pour effectuer le contrôle de gain en fonction de la configuration de réception déterminée.

Selon une caractéristique particulière de l'invention, le dispositif de réception comprend des moyens d'obtention d'une information de signalisation, signalant une transmission desdites données reçues sur au moins un canal radiofréquence dudit canal concaténé, et lesdits moyens d'activation tiennent compte de ladite information de signalisation.

De cette façon, la technique selon l'invention détermine dès la réception du signal transmis la bande nécessaire, en d'autres termes le nombre de canaux utilisés pour la transmission des données. En fonction de cette information de signalisation, les moyens d'activation activent/désactivent le filtre passe-bande de chaque voie de filtrage.

Dans le cas de la norme IEEE802.11n, l'information de signalisation est notamment contenue dans le champ de signalisation HT-SIG2, où un bit de signalisation informe le récepteur que la transmission en cours s'effectue sur une bande de 20 MHz ou de 40 MHz.

Selon un premier mode de réalisation particulier, ledit dispositif comprend en outre :
- des moyens de démodulation des données issues desdits moyens de recombinaison, délivrant des données démodulées sur une voie en quadrature et une voie en phase ;
- des premiers moyens de filtrage et de conversion analogique-numérique des données démodulées sur ladite voie en quadrature ;
- des deuxièmes moyens de filtrage et de conversion analogique-numérique des données démodulées sur ladite voie en phase.

Selon ce premier mode de réalisation, on réutilise la plupart des composants du récepteur superhétérodyne classique, ce qui permet de limiter les modifications des dispositifs existants.

On intègre en outre de façon nouvelle et inventive au moins deux voies de filtrage distinctes permettant une modification dynamique de la configuration de réception, c'est-à-dire une adaptation de la largeur de bande de réception.

Par ailleurs, un tel dispositif de réception peut également être utilisé en tant que dispositif d'émission-réception, afin de mettre en commun, les éléments constitutifs communs à l'émission et à la réception, pour ne pas les dupliquer.

Selon un deuxième mode de réalisation particulier, ledit dispositif comprend en outre :
- des moyens de transposition en bande de base des données issues desdits moyens de recombinaison, délivrant des données en bande de base ;
- des moyens de filtrage et de conversion analogique-numérique desdites données en bande de base.

Ce deuxième mode de réalisation présente avantageusement une simplification par rapport au premier mode de réalisation indiqué ci-dessus, tout en permettant un traitement équivalent des données reçues.

Ce deuxième mode de réalisation s'affranchit des moyens de démodulation sur une voie en quadrature et une voie en phase ce qui permet d'économiser à terme des moyens de conversion analogique numérique, puisqu'un seul convertisseur numérique-analogique est ici nécessaire alors que deux convertisseurs numérique-analogique étaient nécessaires selon le premier mode de réalisation.

En effet, ce deuxième mode de réalisation met directement en oeuvre les moyens de transposition en fréquence intermédiaire des données reçues, suivis de moyens de transposition en bande de base sur une unique voie. La bande passante de cette unique voie est deux fois plus large que celle des deux voies en phase et en quadrature du premier mode de réalisation. Les données reçues sont donc transmises sur cette unique voie de manière similaire à la transmission sur les deux voies en phase et en quadrature selon le premier mode de réalisation.

Les données en bande de base transmises par cette voie unique sont ensuite converties en données numériques à une fréquence d'échantillonnage double de celle du premier mode de réalisation.

Ainsi, à la différence du premier mode de réalisation, il n'est plus nécessaire d'utiliser des premier et deuxième moyens de conversion analogique-numérique et de filtrage dédiés respectivement à la voie en quadrature et à la voie en phase.

Selon un troisième mode de réalisation particulier, ledit dispositif comprend en outre :
- des moyens de conversion analogique-numérique des données issues desdits moyens de recombinaison.

Ce troisième mode de réalisation présente encore une simplification par rapport au deuxième mode de réalisation indiqué ci-dessus.

Ce troisième mode de réalisation s'affranchit des moyens de transposition en bande de base et tire profit des moyens de conversion analogique-numérique.

En effet, selon ce troisième mode de réalisation, les moyens de conversion analogique-numérique utilisés présentent des bandes passantes analogiques très étendues, dans des gammes de fréquence allant au-delà de la fréquence d'échantillonnage requise pour sous-échantillonner les données reçues. Ainsi, les moyens de conversion analogique-numérique de ce troisième mode de réalisation sont aptes à réaliser un sous-échantillonnage des données issues des moyens de recombinaison. Il s'agit par exemple d'un composant de type AD9433 - Analog Devices (marques déposées).

Ainsi, les moyens de conversion analogique-numérique de ce troisième mode de réalisation sous-échantillonnent directement les données reçues.

En conséquence, à la différence du deuxième mode de réalisation, on s'affranchit selon ce troisième mode de réalisation des moyens de transposition en bande de base.

Un autre aspect de l'invention concerne également un procédé de réception de données transmises dans un réseau de communication utilisant une pluralité de canaux radiofréquence, au moins deux canaux radiofréquence adjacents étant concaténés pour former un canal concaténé. Le procédé comprend les étapes suivantes:
- réception de données transmises dans au moins un canal radiofréquence dudit canal concaténé, dites données reçues,
- activation d'au moins une voie de filtrage parmi au moins deux voies de filtrage distinctes, chaque voie de filtrage comprenant un filtre passe-bande dont la bande de fréquence correspond à la bande de fréquence d'un canal radiofréquence distinct dudit canal concaténé, tel que la bande de fréquence globale desdits filtres soit égale à la bande de fréquence dudit canal concaténé,
- filtrage desdites données reçues, mettant en oeuvre la ou lesdites voies de filtrage activées.

Un tel procédé est notamment mis en oeuvre par le dispositif de réception décrit précédemment. Il pourra bien sûr comporter les différentes caractéristiques relatives au dispositif selon l'invention. Ainsi, les caractéristiques et avantages de ce procédé sont les mêmes que ceux du dispositif décrit ci-dessus. Par conséquent, ils ne sont pas détaillés plus amplement.

En particulier, l'étape d'activation des voies de filtrage permet de basculer dynamiquement d'une configuration de réception à une autre.

En effet, l'étape d'activation permet d'activer autant de voies de filtrage que de canaux radiofréquence adjacents nécessaires. Par exemple, une configuration de réception d'un signal transmis sur le canal concaténé formé de deux canaux radiofréquence adjacents concaténés met en oeuvre l'activation de deux voies de filtrage.

A l'inverse, une configuration de réception d'un signal transmis sur un seul des deux canaux radiofréquence adjacents formant le canal concaténé met en oeuvre l'activation d'une seule voie de filtrage.

Des configurations de réception mettant en oeuvre des canaux concaténés formés par plus de deux canaux radiofréquence peuvent également être déduites des exemples donnés précédemment.

L'invention concerne également un programme d'ordinateur comportant des instructions pour la mise en oeuvre du procédé de réception tel que décrit précédemment, lorsque ce programme est exécuté par un processeur.

L'invention concerne également un support d'enregistrement pour la mise en oeuvre d'un procédé décrit précédemment.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A et 1B décrites en relation avec l'art antérieur, présentent un récepteur superhétérodyne de type connu,
- les figures 2A et 2B décrites en relation avec l'art antérieur, présentent un récepteur « Zéro IF » de type connu,
- la figure 3 présente la structure générale d'un dispositif de réception selon l'invention,
- les figures 4 à 6 présentent différents mode de réalisation d'un dispositif de réception selon l'invention,
- les figures 7A et 7B présentent les principales étapes mises en oeuvre par la technique de réception selon l'invention, et détaillent plus précisément l'étape d'activation des voies de filtrage permettant un basculement entre deux configurations de réception.

### 5. Description d'un mode de réalisation de l'invention

### 5.1 Principe Général

Le principe général de l'invention repose sur un dispositif de réception de données radiofréquence apte à être reconfiguré automatiquement afin de s'adapter à une variation de bande passante des données reçues. Pour y parvenir, un tel dispositif met en oeuvre au moins deux voies de filtrage distinctes dont l'activation/désactivation indépendante par des moyens d'activation permet de définir différentes configuration de réception.

Ainsi, selon l'invention, lors de la réception des données, une modification dynamique de la bande passante est réalisée sans occasionner de perturbation sur une transmission établie au préalable selon une configuration de réception distincte.

La figure 3 illustre la structure générale d'un dispositif de réception selon l'invention.

De manière générale, un dispositif de réception 300 selon l'invention comprend principalement les éléments suivants : des moyens de réception 31 de données transmises dans au moins un canal radiofréquence, des moyens de filtrage 32 permettant de filtrer les données reçues et des moyens d'activation 33 d'au moins une des voies de filtrage.

De manière optionnelle, un tel dispositif 300 comprend également des moyens de mesure de puissance 35 et/ou des moyens d'obtention d'une information de signalisation 36 d'une configuration de réception.

Ces différents moyens, selon un exemple particulier de mise en oeuvre, sont décrits plus précisément ci-après.

Les moyens de réception 31 comprennent notamment une antenne, un filtre correspondant par exemple à la bande 5 à 5,9 GHz, un amplificateur faible bruit et un dispositif de contrôle automatique de gain (en anglais AGC « *automatic gain control* ») qui amplifient et réajustent respectivement les amplitudes (encore appelées niveaux de gain) des données reçues S_{R}.

Les données issues des traitements effectués par les moyens de réception sont ensuite traités par des moyens de filtrage 32, comprenant selon cet exemple deux voies de filtrage distinctes, qui peuvent être activées simultanément ou successivement.

Plus précisément, chaque voie de filtrage comporte au moins un filtre passe-bande (respectivement 321 pour la première voie de filtrage et 322 pour la deuxième voie de filtrage). Ces filtres passe-bande sont par exemple de type à onde de surface (en anglais « *Surface wave acoustic Wave filter* »), comme le filtre à onde de surface de filtrage FI à 374 MHz EPCOS (marque déposée), dont les propriétés sont les suivantes :
- chaque filtre respecte le masque d'un filtre pour un canal radiofréquence. Par exemple, dans le cas de la norme IEEE802.11n, chaque filtre présente une largeur de bande de 20 MHz,
- chaque filtre est décalé par rapport à l'autre filtre de la largeur de bande d'un canal radiofréquence, les canaux radiofréquence filtrés par chaque filtre étant adjacents.
- les gabarits de chacun des filtres se coupent idéalement à -6dB lorsque la réponse en phase est identique en ce point ;
- la sommation des réponses des filtres de chaque voie de filtrage forme un filtre idéal dont la bande passante correspond exactement à la concaténation de la bande de filtrage de chacun des filtres. Par exemple, dans le cas de la norme IEEE802.11n on obtient un filtre global de 40 MHz. Dans ce cas précis, la sommation des deux filtres décalés de 20 MHz permet donc de former un filtre idéal de gabarit 40 MHz sans aucune atténuation à la jonction des deux filtres.

Les différentes voies de filtrage peuvent par la suite être activées ou désactivées par les moyens d'activation 33. Selon l'exemple de la figure 3, les moyens d'activation comprennent un amplificateur à gain variable indépendant (331, 332) pour chaque voie de filtrage (321, 322).

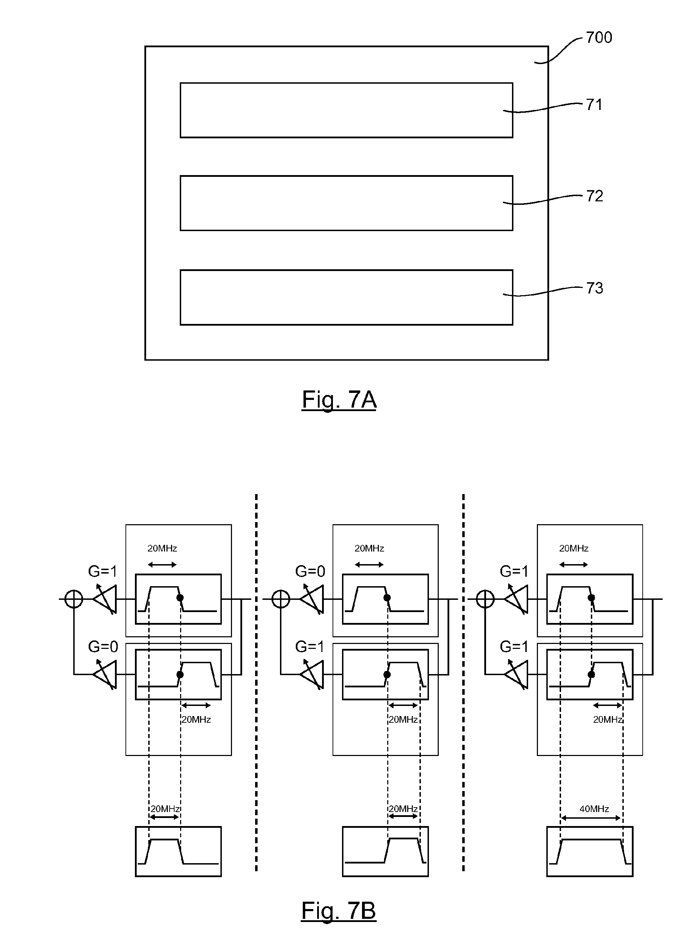

Dans le cas de la norme IEEE802.11n, la différence entre les différentes configurations (20 MHz canal primaire, 20 MHz canal secondaire, 40 MHz) se fait en modifiant les contrôles de gain comme détaillé ultérieurement en relation avec la figure 7B. Cette activation/désactivation qui peut être progressive présente l'avantage d'être fluide et de n'engendrer aucune coupure de transmission/réception car aucune modification significative n'est provoquée sur chaque voie de filtrage.

Au contraire, selon l'art antérieur, la nécessité d'effectuer des commutations de filtre et/ou de fréquence d'oscillateur lors des commutations entre les différentes configurations de réception (20 MHz canal primaire, 20 MHz canal secondaire, 40 MHz) entraîne des modifications brusques et significatives de la réponse de la bande en cours d'exploitation au moment de la commutation.

L'activation/désactivation progressive selon l'invention permet de mesurer et d'équilibrer les voies de filtrage afin que le rapport signal à bruit de conversion analogique/numérique soit optimal quelque soit la configuration de réception. Ainsi, si des données sont transmises dans un seul canal radiofréquence, l'amplitude de ces données peut être augmentée. Si des données sont transmises dans plusieurs canaux radiofréquences, leurs amplitudes respectives doivent cette fois être diminuées afin que l'amplitude globale à l'entrée du convertisseur analogique-numérique reste constante.

Pour l'exemple précis de la norme IEEE802.11n, seule deux configurations de réception à 20 MHz et à 40 MHz sont visées. Cependant l'invention peut être mise en oeuvre pour d'autres applications nécessitant des bandes de fréquence de réception plus large et la concaténation de plus de deux canaux radiofréquence. Ainsi, des voies de filtrage multiples et les amplificateurs à gain variable correspondant peuvent également être mis en oeuvre selon l'application visée.

Par ailleurs, de manière optionnelle, des moyens de mesure de puissance 35 permettent de connaître la puissance respective de chacun des deux canaux en fréquence intermédiaire.

Avec ces informations de puissance, et suivant les configurations de réception recherchées un contrôle de gain va alors être effectué sur les amplificateurs à gain variable situés dans chacune des voies de filtrage. Ce contrôle de gain va ainsi permettre de passer progressivement d'une configuration de réception à une autre sans perturbation, en combinant en niveau de gain les deux voies de filtrage.

En outre, le dispositif selon l'invention comprend des moyens d'obtention 36 d'une information signalant la configuration de réception dans laquelle le dispositif de réception doit être reconfiguré.

Par exemple, à la réception du signal une information de signalisation indique que la transmission est effectuée sur une largeur de bande de 40 MHz correspondant à la concaténation de deux canaux radiofréquence adjacents de 20 MHz. Les moyens d'activation prennent alors en considération cette information de signalisation afin d'activer les deux voies de filtrage correspondantes permettant d'obtenir une réception à 40 MHz.

A l'inverse, si aucune information de signalisation n'est détectée à la réception, les moyens d'activation considèrent une configuration de réception par défaut. Par exemple, cette configuration peut correspondre à une réception sur une largeur de bande de 20 MHz.

Selon une variante de réalisation, l'information de signalisation est une information binaire, indiquant le nombre de canaux radiofréquence utilisés pour la transmission. Ainsi, si l'on considère par exemple une réception de bande variable pouvant aller jusqu'à une largeur de bande de 60 MHz, l'information de signalisation binaire est codée sur deux bits, par exemple 00 correspondant à une transmission effectuée sur une bande de 20 MHz, 01 une transmission sur une bande de 40 MHz, et 11 une transmission sur une bande de 60 MHz.

Dans le cas de la norme IEEE802.11n, l'information de signalisation est notamment contenue dans le champ de signalisation HT-SIG2, où un bit de signalisation informe le récepteur que la transmission en cours est à 20 MHz ou à 40 MHz.

### 5.2 Description de différents modes cle réalisation

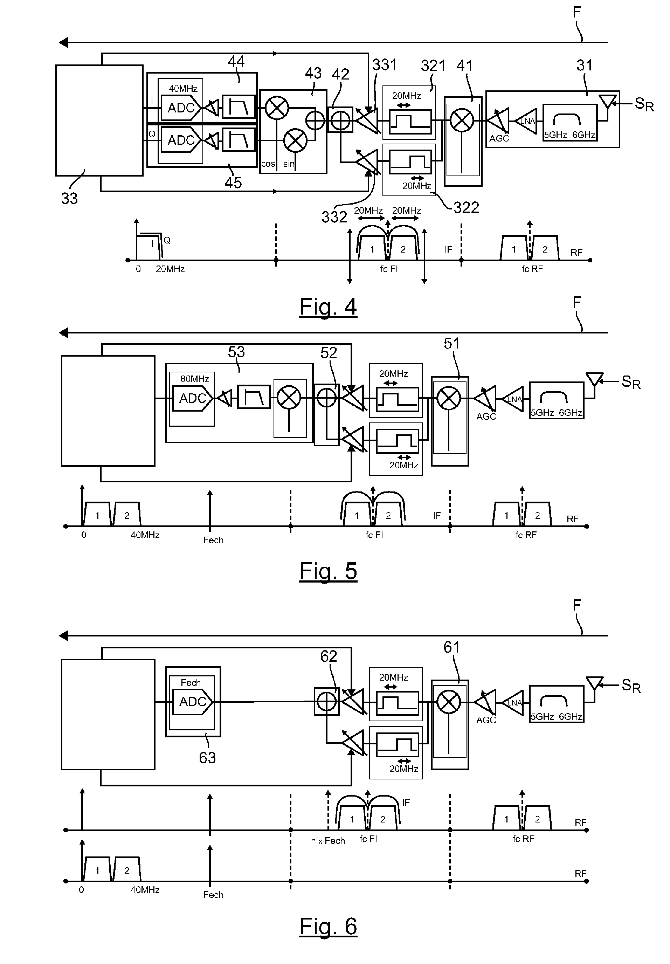

On présente, en relation avec les figures 4 à 6, trois modes de réalisation du dispositif de réception selon l'invention. Ces trois modes de réalisation visent à être utilisés selon la norme IEEE802.11n.

D'autres configurations de réception sur des bandes passantes plus larges peuvent également être considérées, par exemple à 60 MHz, 80 MHz, 100 MHz, en considérant par exemple un canal concaténé formé de trois, quatre ou cinq canaux radiofréquence de 20 MHz, et autant de voies de filtrage correspondantes.

### 5.2.1 Premier mode de réalisation

La figure 6 illustre un premier mode de réalisation d'un récepteur selon l'invention, basé sur un dispositif de réception superhétérodyne classique modifié pour intégrer les éléments caractéristiques de l'invention précédemment listés en relation avec la figure 3.

Selon ce premier mode de réalisation, le signal S_{R} correspondant aux données reçues est reçu en radiofréquence, dans la bande 5-5,9 GHz par exemple. Il est filtré avec cette largeur de bande puis converti en fréquence intermédiaire par des moyens de transposition (41) en fréquence intermédiaire, délivrant des données en fréquence intermédiaire.

On considère à nouveau deux voies de filtrage 321 et 322 comprenant chacune un filtre passe-bande de 20 MHz filtrant les données en fréquence intermédiaire, les filtres passe-bande affectés à chacune des voies étant décalés l'un par rapport à l'autre. Chaque voie de filtrage peut être activée par un amplificateur à gain variable distinct, respectivement l'amplificateur à gain variable 331 pour la première voie de filtrage et l'amplificateur à gain variable 332 pour la deuxième voie de filtrage. Ainsi, selon la configuration de réception voulue, les différentes voies de filtrage sont activées ou non selon la valeur de gain de l'amplificateur associé à la voie de filtrage (comme détaillé ultérieurement en relation avec la figure 7B).

Un dispositif de réception selon ce premier mode de réalisation comprend des moyens de recombinaison (42), recombinant les données issues des différentes voies de filtrage. Les données recombinées sont ensuite démodulées en bande de base par des moyens de démodulation (43) sur une voie en quadrature (Q) et une voie en phase (I). Enfin, des premiers moyens (44) de filtrage et de conversion analogique-numérique des données démodulées sur la voie en quadrature et des deuxièmes moyens (45) de filtrage et de conversion analogique-numérique des données démodulées sur la voie en phase convertissent les données analogiques en bande de base en données numériques.

Il est possible de dissocier les deux canaux radiofréquence formant le canal concaténé par des moyens de mesure de puissance (non représentés sur la figure 4) mettant en oeuvre un traitement numérique de type transformée de Fourier rapide (en anglais FFT pour « Fast Fourier Transform ») ou par combinaison linéaire des voies en phase et en quadrature avec leurs versions obtenues après transformation de Hilbert. Il est alors possible de connaître la puissance respective de chacun des deux canaux radiofréquence en fréquence intermédiaire.

Avec ces informations de puissance, et suivant les configurations de réception recherchées, un contrôle de gain est effectué sur les amplificateurs à gain variable situés dans les deux voies de filtrage séparées en fréquence intermédiaire. Ce contrôle de gain va ainsi permettre de passer progressivement d'une configuration de réception à une autre sans perturbation, en combinant en niveaux de gain les deux voies de filtrage, et sans avoir à modifier la fréquence des moyens de transposition.

Comme déjà indiqué, un récepteur selon ce premier mode de réalisation présente l'avantage de limiter les modifications des dispositifs existants. De plus, un tel dispositif de réception peut appartenir à un dispositif d'émission-réception, ce qui permet de mutualiser les éléments constitutifs communs à l'émission et à la réception.

Ainsi, un récepteur selon ce mode de réalisation réutilise les composants du récepteur superhétérodyne classique (ou de l'émetteur/récepteur superhétérodyne classique), et intègre en outre de façon nouvelle et inventive au moins deux voies de filtrage distinctes permettant une modification dynamique de la configuration de réception, c'est-à-dire une adaptation de la largeur de bande de réception.

En outre, le fait de réutiliser les composants du récepteur superhétérodyne classique permet d'envisager des simplifications dans l'étage bande de base situé après les voies de filtrage, telles que décrites dans les deux mode de réalisation suivants.

Par ailleurs, ce premier mode de réalisation présente l'avantage d'utiliser une fréquence d'échantillonnage la plus basse possible.

On note toutefois que selon ce premier mode de réalisation, les étages analogiques bande de base des deux voies en phase et en quadrature doivent être bien appariés, c'est-à-dire paramétrés, afin qu'aucun déséquilibrage d'amplitude et de phase ne se produise entre les deux voies en phase et en quadrature avant conversion analogique-numérique, afin d'éviter des distorsions sur le signal numérisé.

### 5.2.2 Deuxième mode de réalisation

Ainsi une première simplification du récepteur illustré en figure 4, selon un deuxième mode de réalisation représenté par la figure 5, peut consister à ne pas démoduler directement les données reçues sur deux voies en phase et en quadrature après filtrage en fréquence intermédiaire, mais à effectuer une transposition en bande de base de manière à ce qu'un seul convertisseur analogique-numérique soit suffisant pour échantillonner l'intégralité du signal.

La fréquence d'échantillonnage doit alors être doublée par rapport à celle du premier mode de réalisation présentant deux composantes en phase et en quadrature. Ainsi, selon la norme IEEE802.11n par exemple, la fréquence d'échantillonnage doit être de l'ordre de 80 MHz. Cette première simplification est tout à fait réalisable compte tenu des caractéristiques des convertisseurs analogique-numérique actuels.

Avantageusement, il est possible d'obtenir un équilibrage parfait des deux voies en phase et en quadrature qui pourront être obtenues (non représentées) après conversion analogique-numérique.

En effet, il n'existe pas de risque de déséquilibrage d'amplitude et de phase, selon ce deuxième mode de réalisation car les composantes en phase et quadrature sont séparées après la conversion analogique-numérique.

La structure du dispositif de réception selon le deuxième mode de réalisation est représentée par la figure 5 et comprend donc, en plus des moyens de réception 31, des moyens de filtrage 32 comprenant deux voies de filtrage, et des moyens d'activation 33 tels que précédemment décrits, des moyens de transposition 51 en fréquence intermédiaire des données reçues, délivrant des données en fréquence intermédiaire alimentant les voies de filtrage, des moyens de recombinaison 52 des données issues des voies de filtrage, et des moyens 53 de transposition en bande de base , délivrant des données en bande de base, et des moyens de filtrage et de conversion analogique-numérique des données en bande de base.

### 5.2.3 Troisième mode de réalisation

Une simplification supplémentaire du récepteur illustré en figure 5 peut être mise en oeuvre selon un troisième mode de réalisation, en tirant profit des performances des convertisseurs analogiques-numériques actuellement disponibles.

En effet, les convertisseurs analogique-numérique actuels présentent des bandes passantes analogiques très étendues, dans des gammes de fréquence allant au-delà de leur fréquence d'échantillonnage, afin de pouvoir réaliser un sous-échantillonnage. Cette technique selon un troisième mode de réalisation permet de s'affranchir entièrement de l'opération de conversion de fréquence intermédiaire vers la bande de base, en réalisant la conversion analogique numérique directement en fréquence intermédiaire après le filtrage à deux voies de filtrage distinctes.

Il s'agit par exemple d'un convertisseur analogique-de type AD9433 ou AD9204 de ANALOG DEVICES, ou de type MAX19516 ou MAX12559 de MAXIM (marques déposées). Par exemple, pour le convertisseur de type AD9433, la fréquence d'échantillonnage maximale est de 105/125 MSPS (million de symboles par seconde, c'est-à-dire MHz), et la bande passante analogique s'étend jusqu'à 750 MHz.

Ainsi la structure du récepteur est donc encore notablement simplifiée, puisque les données après recombinaison des deux voies de filtrage parviennent directement à l'entrée du convertisseur analogique-numérique, sans nécessiter d'opérations de transposition de fréquence et filtrage.

Dans ce cas, si la bande passante du convertisseur analogique-numérique englobe la bande utile du signal en fréquence intermédiaire, et si la fréquence d'échantillonnage est choisie de manière à ce que l'écart entre un multiple de cette fréquence d'échantillonnage et la fréquence intermédiaire soit égal à la largeur de bande d'un canal radiofréquence, alors le signal en bande de base qui sera obtenu en numérique sera en tout point équivalent à celui du deuxième mode de réalisation de la figure 5.

La structure du dispositif de réception selon le troisième mode de réalisation est représentée par la figure 6 et comprend donc, en plus des moyens de réception 31, des moyens de filtrage 32 comprenant deux voies de filtrage et des moyens d'activation 33 tels que précédemment décrits, des moyens de transposition 61 en fréquence intermédiaire des données reçues, délivrant des données en fréquence intermédiaire alimentant les voies de filtrage, des moyens de recombinaison 62 des données issues des voies de filtrage et des moyens de conversion 63 analogique-numérique des données issues des moyens de recombinaison.

Les moyens de conversion 63 analogique-numérique se caractérisent par leur aptitude à effectuer un sous-échantillonnage des données issues desdits moyens de recombinaison.

En particulier, on note que la fréquence de sous-échantillonnage dépend de la fréquence intermédiaire FI. Par exemple, en prenant une valeur de fréquence intermédiaire centrale FI de 374 MHz pour un premier canal radiofréquence de 20 MHz, correspondant notamment au filtre à onde de surface de filtrage FI à 374MHz EPCOS (marque déposée), la fréquence de sous échantillonnage correspondante est égale à 91 MHz (qui, multipliée par quatre, donne 364 MHz) et se situe donc à 20 MHz de la fréquence centrale d'un canal de 40 MHz de bande passante.

### 5.3 Procécé de réception

On représente en relation avec la figure 7A, les principales étapes de la technique de réception mise en oeuvre par un récepteur selon l'invention précédemment décrit.

Selon la figure 7A, un tel procédé de réception comprend les étapes suivantes :
- réception 71 de données transmises dans au moins un canal radiofréquence du canal concaténé, dites données reçues,
- activation 72 d'au moins une voie de filtrage parmi au moins deux voies de filtrage distinctes, chaque voie de filtrage comprenant un filtre passe-bande dont la bande de fréquence correspond à la bande de fréquence d'un canal radiofréquence distinct du canal concaténé, tel que la bande de fréquence globale desdits filtres soit égale à la bande de fréquence du canal concaténé,
- filtrage 73 des données reçues, mettant en oeuvre la ou les voies de filtrage activées.

Par exemple, une première application selon la norme IEEE802.11n, est la réception de données transmises sur un canal primaire présentant une bande de fréquence de 20 MHz et la vérification de l'occupation d'un canal secondaire par le mécanisme couche physique CCA, afin de pouvoir éventuellement étendre la transmission à une bande de fréquence de 40 MHz.

Au début de la transmission, le contrôle de gain, mis en oeuvre par les moyens d'activation précédemment décrits, fixe le niveau de gain de la deuxième voie de filtrage, associé au canal secondaire, à 0. La deuxième voie de filtrage est en conséquence désactivée, puisque les données sont transmises sur le canal primaire associé à la première voie de filtrage. Le contrôle de gain, mis en oeuvre par les moyens d'activation, augmente progressivement le niveau de gain jusqu'à ce qu'il soit suffisant pour réaliser une mesure de puissance tout en évitant de surpasser le niveau de gain du canal primaire.

De cette manière, un « scan » du canal secondaire peut donc être effectué sans apporter de perturbation dans la réception en cours du canal primaire. Cette modification du contrôle de gain correspond à une « demi-activation » et permet donc de scanner les canaux non utilisés, sans modifier la configuration de réception.

Une seconde application est l'activation de la deuxième voie de filtrage, permettant la réception de données sur au moins deux canaux radiofréquence formant un canal concaténé. Cette activation correspond donc au basculement sans couture d'un mode de réception à 20 MHz vers un mode étendu à 40 MHz, par exemple après obtention d'une information de signalisation, portée par exemple par un bit de signalisation HT-SIG2 sur le canal primaire.

La figure 7B illustre les principales caractéristiques du basculement d'une transmission sur une bande de 20MHz à une transmission sur une bande de 40 MHz, et en particulier de l'étape d'activation de la deuxième voie de filtrage pour cette application.

Comme déjà indiqué, les deux filtres passe-bande de 20 MHz associés chacun à une voie de filtrage distincte doivent respecter les contraintes de chaque voie de filtrage afin de se sommer correctement pour générer un filtre à 40 MHz. Chaque filtre passe-bande est donc décalé de 10MHz par rapport à la fréquence centrale intermédiaire FI (par exemple, la fréquence centrale du filtre passe-bande de la première voie de filtrage est égale à FI+10 MHz et la fréquence centrale du filtre passe-bande de la deuxième voie de filtrage est égale à FI-10 MHz).

L'activation de l'une et/ou l'autre des voies de filtrage est illustrée en figure 7B. En particulier, la figure 7B illustre les configurations de réception correspondant respectivement à :
- l'activation de la première voie de filtrage, c'est-à-dire d'un filtre passe-bande présentant une largeur de bande de 20 MHz sur la partie haute du canal concaténé de 40MHz, correspondant par exemple au canal primaire et permettant la réception de données sur ce canal primaire ;
- l'activation de la deuxième voie de filtrage, c'est à dire d'un filtre passe-bande présentant une largeur de bande de 20 MHz sur la partie basse du canal concaténé de 40 MHz, correspondant au canal secondaire et permettant la réception de données sur ce canal secondaire ;
- l'activation des deux voies de filtrage, c'est à dire des deux filtres passe-bande ci-dessus de 20 MHz, définissant un filtre « global » de largeur de bande de 40 MHz, permettant la réception de données sur le canal primaire et sur le canal secondaire.

La différence entre les différentes configurations (20 MHz primaire, 20 MHz secondaire, 40 MHz) est réalisée en modifiant les contrôles de gain avec un gain G=1 pour activer la voie de filtrage sélectionnée ou avec un gain G=0 pour la désactiver. En d'autres termes, pour une réception sur le canal primaire uniquement, l'amplificateur à gain variable associé à la première voie de filtrage est égal à 1 et l'amplificateur à gain variable associé à la deuxième voie de filtrage est égal à 0. Pour une réception sur le canal secondaire uniquement, l'amplificateur à gain variable associé à la première voie de filtrage est égal à 0 et l'amplificateur à gain variable associé à la deuxième voie de filtrage est égal à 1. Pour une réception sur une bande de 40 MHz, l'amplificateur à gain variable associé à la première voie de filtrage et l'amplificateur à gain variable associé à la deuxième voie de filtrage sont égaux à 1.Cette activation/désactivation qui peut être progressive présente l'avantage d'être fluide et de n'engendrer aucune coupure de transmission/réception car aucune modification significative n'est provoquée sur chaque voie de filtrage.

## Revendications

1. Dispositif de réception de données (300) transmises dans un réseau de communication utilisant une pluralité de canaux radiofréquence, au moins deux canaux radiofréquence adjacents étant concaténés pour former un canal concaténé, comprenant :
- des moyens de réception (31) de données transmises dans au moins un canal radiofréquence dudit canal concaténé, dites données reçues,
- des moyens de transposition (41,51,61) en fréquence intermédiaire desdites données reçues, délivrant des données en fréquence intermédiaire,
- des moyens de filtrage (32) desdites données en fréquence intermédiaire, lesdits moyens de filtrage (32) comprenant au moins deux voies de filtrage distinctes (321, 322), chaque voie de filtrage comprenant un filtre passe-bande dont la bande de fréquence correspond à la bande de fréquence d'un canal radiofréquence distinct dudit canal concaténé, tel que la bande de fréquence globale desdits filtres soit égale à la bande de fréquence dudit canal concaténé,
et **caractérisé en ce qu'**il comprend en outre :
- des moyens d'activation (33) d'au moins une desdites voies de filtrage, permettant de filtrer lesdites données reçues,
- des moyens de recombinaison (42) des données issues desdites voies de filtrage.

2. Dispositif de réception selon la revendication 1, **caractérisé en ce que** lesdits moyens d'activation comprennent au moins un amplificateur à gain variable (331, 332).

3. Dispositif de réception selon la revendication 1, **caractérisé en ce que** lesdits filtres passe-bande présentent des gabarits se coupant à -6dB.

4. Dispositif de réception selon la revendication 1, caractérisé en qu'il comprend des moyens de mesure de puissance (35) desdites données reçues, sur chaque canal radiofréquence dudit canal concaténé, et en ce que lesdits moyens d'activation tiennent compte desdites mesures de puissance.

5. Dispositif de réception selon la revendication 1, **caractérisé en ce qu'**il comprend des moyens d'obtention (36) d'une information de signalisation, signalant une transmission desdites données reçues sur au moins un canal radiofréquence dudit canal concaténé, et **en ce que** lesdits moyens d'activation tiennent compte de ladite information de signalisation.

6. Dispositif de réception selon la revendication 1, **caractérisé en ce que** ledit dispositif comprend en outre :
- des moyens de démodulation (43) des données issues desdits moyens de recombinaison, délivrant des données démodulées sur une voie en quadrature et une voie en phase ;
- des premiers moyens (44) de filtrage et de conversion analogique-numérique des données démodulées sur ladite voie en quadrature ;
- des deuxièmes moyens (45) de filtrage et de conversion analogique-numérique des données démodulées sur ladite voie en phase.

7. Dispositif de réception selon la revendication 1, **caractérisé en ce que** ledit dispositif comprend en outre :
- des moyens (53) de transposition en bande de base des données issues desdits moyens de recombinaison, délivrant des données en bande de base ;
- des moyens de filtrage et de conversion analogique-numérique desdites données en bande de base.

8. Dispositif de réception selon la revendication 1, **caractérisé en ce que** ledit dispositif comprend en outre :
- des moyens de conversion analogique-numérique (63) des données issues desdits moyens de recombinaison.

9. Procédé de réception de données transmises dans un réseau de communication utilisant une pluralité de canaux radiofréquence, au moins deux canaux radiofréquence adjacents étant concaténés pour former un canal concaténé, comprenant les étapes suivantes:
- réception (71) de données transmises dans au moins un canal radiofréquence dudit canal concaténé, dites données reçues,
- transposition en fréquence intermédiaire desdites données reçues, délivrant des données en fréquence intermédiaire,
et **caractérisé en ce qu'**il comprend en outre les étapes suivantes :- activation (72) d'au moins une voie de filtrage parmi au moins deux voies de filtrage distinctes, chaque voie de filtrage comprenant un filtre passe-bande dont la bande de fréquence correspond à la bande de fréquence d'un canal radiofréquence distinct dudit canal concaténé, tel que la bande de fréquence globale desdits filtres soit égale à la bande de fréquence dudit canal concaténé,
- filtrage (73) desdites données en fréquence intermédiaire, mettant en oeuvre la ou lesdites voies de filtrage activées.
- recombinaison des données issues desdites voies de filtrage activées.

10. Programme d'ordinateur comportant des instructions pour la mise en oeuvre d'un procédé selon la revendication 9 lorsque ce programme est exécuté par un processeur.

11. Support d'enregistrement portant des instructions de programme d'ordinateur pour la mise en oeuvre d'un procédé selon la revendication 9.

## Patentansprüche

1. Empfangsvorrichtung (300) für Daten, die in einem Kommunikationsnetz übertragen werden, das eine Vielzahl von Funkfrequenzkanälen verwendet, wobei mindestens zwei aneinandergrenzende Funkfrequenzkanäle verknüpft sind, um einen verknüpften Kanal zu bilden, umfassend:
- Empfangsmittel (31) für Daten, die in mindestens einem Funkfrequenzkanal des verknüpften Kanals übertragen werden, empfangene Daten genannt,
- Mittel (41, 51, 61) zur Transposition der empfangenen Daten in eine Zwischenfrequenz, die Zwischenfrequenzdaten liefern,
- Mittel (32) zum Filtern der Zwischenfrequenzdaten, wobei die Filtermittel (32) mindestens zwei getrennte Filterwege (321, 322) umfassen, wobei jeder Filterweg einen Bandfilter umfasst, dessen Frequenzband dem Frequenzband eines getrennten Funkfrequenzkanals des verknüpften Kanals entspricht, so dass das globale Frequenzband der Filter gleich dem Frequenzband des verknüpften Kanals ist,
und **dadurch gekennzeichnet, dass** sie ferner umfasst:
- Mittel (33) zur Aktivierung mindestens eines der Filterwege, die es ermöglichen, die empfangenen Daten zu filtern,
- Mittel (42) zur Rekombination der von den Filterwegen kommenden Daten.

2. Empfangsvorrichtung nach Anspruch 1, **dadurch gekennzeichnet, dass** die Aktivierungsmittel mindestens einen Verstärker mit variabler Verstärkung (331, 332) umfassen.

3. Empfangsvorrichtung nach Anspruch 1, **dadurch gekennzeichnet, dass** die Bandfilter Profile aufweisen, die sich bei -6dB schneiden.

4. Empfangsvorrichtung nach Anspruch 1, **dadurch gekennzeichnet, dass** sie Mittel (35) zum Messen der Leistung der empfangenen Daten auf jedem Funkfrequenzkanal des verknüpften Kanals umfasst, und dass die Aktivierungsmittel die Leistungsmessungen berücksichtigen.

5. Empfangsvorrichtung nach Anspruch 1, **dadurch gekennzeichnet, dass** sie Mittel (36) für den Erhalt einer Anzeigeinformation umfasst, die eine Übertragung der empfangenen Daten auf mindestens einem Funkfrequenzkanal des verknüpften Kanals anzeigt, und dass die Aktivierungsmittel die Anzeigeinformation berücksichtigen.

6. Empfangsvorrichtung nach Anspruch 1, **dadurch gekennzeichnet, dass** die Vorrichtung ferner umfasst:
- Mittel (43) zur Demodulation der von den Rekombinationsmitteln kommenden Daten, die demodulierte Daten auf einem Quadraturweg und einem Phasenweg liefern;
- erste Mittel (44) zum Filtern und zur Analog-Digital-Umsetzung der demodulierten Daten auf dem Quadraturweg;
- zweite Mittel (45) zum Filtern und zur Analog-Digital-Umsetzung der demodulierten Daten auf dem Phasenweg.

7. Empfangsvorrichtung nach Anspruch 1, **dadurch gekennzeichnet, dass** die Vorrichtung ferner umfasst:
- Mittel (53) zur Transposition der von den Rekombinationsmitteln kommenden Daten in ein Basisband, die Basisbanddaten liefern;
- Mittel zum Filtern und zur Analog-Digital-Umsetzung der Basisbanddaten.

8. Empfangsvorrichtung nach Anspruch 1, **dadurch gekennzeichnet, dass** die Vorrichtung ferner umfasst:
- Mittel (63) zur Analog-Digital-Umsetzung der von den Rekombinationsmitteln kommenden Daten.

9. Verfahren für den Empfang von Daten, die in einem Kommunikationsnetz übertragen werden, das eine Vielzahl von Funkfrequenzkanälen verwendet, wobei mindestens zwei aneinandergrenzende Funkfrequenzkanäle verknüpft sind, um einen verknüpften Kanal zu bilden, umfassend die folgenden Schritte:
- Empfang (71) von Daten, die in mindestens einem Funkfrequenzkanal des verknüpften Kanals übertragen werden, empfangene Daten genannt,
- Transposition der empfangenen Daten in eine Zwischenfrequenz, was Zwischenfrequenzdaten liefert,
und **dadurch gekennzeichnet, dass** es ferner die folgenden Schritte umfasst:
- Aktivierung (72) mindestens eines Filterwegs unter mindestens zwei getrennten Filterwegen, wobei jeder Filterweg einen Bandfilter umfasst, dessen Frequenzband dem Frequenzband eines getrennten Funkfrequenzkanals des verknüpften Kanals entspricht, so dass das globale Frequenzband der Filter gleich dem Frequenzband des verknüpften Kanals ist,
- Filtern (73) der Zwischenfrequenzdaten, wobei der oder die aktivierten Filterwege eingesetzt werden,
- Rekombination der von den aktivierten Filterwegen kommenden Daten.

10. Computerprogramm, umfassend Befehle für den Einsatz eines Verfahrens nach Anspruch 9, wenn dieses Programm von einem Prozessor ausgeführt wird.

11. Aufzeichnungsmedium, das Computerprogrammbefehle für den Einsatz eines Verfahrens nach Anspruch 9 trägt.

## Claims

1. Device for receiving data (300) transmitted in a communication network using a plurality of radiofrequency channels, at least two adjacent radiofrequency channels being concatenated to form a concatenated channel, comprising:
- means (31) for receiving data transmitted in at least one radiofrequency channel of said concatenated channel, known as received data,
- means (41,51,61) for transposing said received data to intermediate frequency, yielding intermediate frequency data,
- means (32) for filtering said intermediate frequency data, said filtering means (32) comprising at least two separate filtering paths (321,322), each filtering path comprising a band-pass filter, the frequency band of which corresponds to the frequency band of a separate radiofrequency channel from said concatenated channel, such that the overall frequency band of said filters is equal to the frequency band of said concatenated channel,
and **characterized in that** it furthermore comprises:
- means (33) for activating at least one of said filtering paths, making it possible to filter said received data,
- means (42) for recombining the data output by said filtering paths.

2. Reception device according to Claim 1, **characterized in that** said activating means comprise at least one variable-gain amplifier (331, 332).

3. Reception device according to Claim 1, **characterized in that** said band-pass filters have templates intersecting at -6dB.

4. Reception device according to Claim 1, **characterized in that** it comprises means (35) for measuring the power of said received data, over each radiofrequency channel of said concatenated channel, and **in that** said activating means take account of said power measurements.

5. Reception device according to Claim 1, **characterized in that** it comprises means (36) for obtaining an item of signalling information, signalling a transmission of said received data over at least one radiofrequency channel of said concatenated channel, and **in that** said activating means take account of said item of signalling information.

6. Reception device according to Claim 1, **characterized in that** said device furthermore comprises:
- means (43) for demodulating the data output by said recombining means, yielding demodulated data on a quadrature path and an in-phase path;
- first means (44) for filtering and analogue-to-digital conversion of the demodulated data on said quadrature path;
- second means (45) for filtering and analogue to-digital conversion of the demodulated data on said in-phase path.

7. Reception device according to Claim 1, **characterized in that** said device furthermore comprises:
- means (53) for transposing the data output by said recombining means to baseband, yielding baseband data;
- means for filtering and analogue-to-digital conversion of said baseband data.

8. Reception device according to Claim 1, **characterized in that** said device furthermore comprises:
- means (63) for analogue-to-digital conversion of the data output by said recombining means.

9. Method for receiving data transmitted in a communication network using a plurality of radiofrequency channels, at least two adjacent radiofrequency channels being concatenated to form a concatenated channel, comprising the following steps:
- receiving (71) data transmitted in at least one radiofrequency channel of said concatenated channel, known as received data,
- transposing said received data to intermediate frequency, yielding intermediate frequency data,
and **characterized in that** it furthermore comprises the following steps:
- activating (72) at least one filtering path among at least two separate filtering paths, each filtering path comprising a band-pass filter, the frequency band of which corresponds to the frequency band of a separate radiofrequency channel from said concatenated channel, such that the overall frequency band of said filters is equal to the frequency band of said concatenated channel,
- filtering (73) said intermediate frequency data, employing said activated filtering path(s),
- recombining data output by said activated filtering paths.

10. Computer program including instructions for the implementation of a method according to Claim 9 when this program is executed by a processor.

11. Storage medium bearing computer program instructions for the implementation of a method according to Claim 9.
